**Europäisches Patentamt**

**European Patent Office**

**Office européen des brevets**

(11) Numéro de publication : **0 336 835 B1**

(12) # FASCICULE DE BREVET EUROPEEN

(45) Date de publication du fascicule du brevet : **13.01.93 Bulletin 93/02**

(51) Int. Cl.⁵ : **A23B 4/08,** A23L 1/325

(21) Numéro de dépôt : **89400922.4**

(22) Date de dépôt : **04.04.89**

(54) **Adjuvant de congélation pour aliments à base de chair hachée.**

Le dossier contient des informations techniques présentées postérieurement au dépôt de la demande et ne figurant pas dans le présent fascicule.

(30) Priorité : **08.04.88 FR 8804723**

(43) Date de publication de la demande : **11.10.89 Bulletin 89/41**

(45) Mention de la délivrance du brevet : **13.01.93 Bulletin 93/02**

(84) Etats contractants désignés : **BE DE ES FR GB IT NL SE**

(56) Documents cités :
**GB-A- 2 015 866**
**PATENT ABSTRACTS OF JAPAN, vol. 4, no. 93 (C-17)[575], 5 juillet 1980, page 122 C 17; &JP-A-55 58 058 (NIKKEN KAGAKUK.K.) 30-04-1980**

(73) Titulaire : **Roquette Frères**
**F-62136 Lestrem (FR)**

(72) Inventeur : **Serpelloni, Michel**
**155, Route Nationale**
**F-62660 Beuvry-les-Bethune (FR)**
Inventeur : **Rossi, Laurent**
**106, rue de St Venant**
**F-62190 Lilliers (FR)**

(74) Mandataire : **Koch, Gustave et al**
**Cabinet PLASSERAUD 84, rue d'Amsterdam**
**F-75009 Paris (FR)**

## Description

L'invention a pour objet un adjuvant de congélation pour aliments à base de chair hachée.

Elle vise également un procédé de préparation de cet adjuvant ainsi que l'application de ce dernier à la préparation des aliments en question.

Elle concerne plus particulièrement les aliments qui sont à base de chair d'animaux marins et notamment de poisson; ces aliments sont connus sous le terme collectif japonais de "KAMABOKO" qui recouvre toute une "charcuterie de la mer"; le constituant essentiel de ces aliments du type KAMABOKO est une matière première désignée par le terme, également japonais, de "SURIMI"; il s'agit de chair de poisson dont on a retiré la peau, les arêtes et les abats et qui est hachée après lavage prolongé à l'eau.

L'éloignement des lieux de pêche et le fait que l'obtention d'un SURIMI de qualité satisfaisante exige l'utilisation d'une chair de poisson extrêmement fraîche font que ce produit est fabriqué de plus en plus souvent directement à bord des navires-usine où il est congelé pour pouvoir être conservé jusqu'au moment de son utilisation pour la fabrication par exemple du KAMABOKO.

Or, la congélation fait perdre de façon irréversible ses propriétés fonctionnelles au SURIMI et partant à l'aliment final dont il est un constituant important. Ces propriétés fonctionnelles comprennent l'élasticité du gel formé après cuisson du SURIMI et le degré de blancheur de ce SURIMI.

Il a été proposé, par la demande de brevet JP-A-55-58058, d'améliorer la résistance de chair de poisson hachée congélée en malaxant de 40 à 100 parties de sucre ou d'alcool-sucre, de 2 à 3 parties d'un phosphate polymérisé, de 0,1 à 5 parties de glycolate de sodium de cellulose et 100 parties de chair de poisson constituant une matière première destinée à la congélation.

Il a également été proposé, notamment par les brevets français N° 77 16687 et 79 05977, de lutter contre les inconvénients consécutifs à la congélation, en incorporant au SURIMI avant congélation, et en pratique au niveau du hachage de la chair de poisson, un adjuvant se présentant sous forme de particules constituées:

- d'un agent tensio-actif et/ou d'une huile ou graisse,
- d'un sucre ou sucre-alcool,

l'agent tensio-actif, l'huile ou la graisse étant dispersés dans le sucre ou sucre-alcool à l'état colloïdal, les particules en question étant d'une granulométrie inférieure à 0,85 mm lorsqu'elles contiennent un agent tensioactif et éventuellement une huile ou graisse, et d'une granulométrie inférieure à 1 mm lorsqu'elles ne contiennent pas d'agent tensio-actif.

Les particules de cet adjuvant connu peuvent également contenir des polyphosphates.

L'adjuvant en question n'est efficace que dans la mesure où il est dispersé de façon homogène au sein des produits, notamment de la chair de poisson hachée, auxquels il s'agit de conserver leurs propriétés fonctionnelles en dépit du traitement de congélation.

Et la dispersion de l'adjuvant au sein de la masse de chair hachée à laquelle il est incorporé au moment du hachage --qui se déroule à une température inférieure à 10°C, peu propice à cette dispersion mais nécessaire pour éviter toute dénaturation des protéines de la chair de poisson--, doit être rapide car l'étape de hachage doit être brève tant pour les raisons qui viennent d'être exposées à propos de la température que pour des raisons de productivité.

Selon les deux brevets français rappelés ci-dessus, ce but serait atteint grâce à la faible granulométrie des adjuvants décrits, lesdits brevets français précisant que tout adjuvant de granulométrie supérieure aux limites indiquées ci-dessus est à écarter par suite d'une aptitude insuffisante à la dispersion et à la dissolution.

Mais, même aux granulométries préconisées par les deux brevets français, non seulement cette aptitude n'est nullement optimale mais, de plus, les granulométries en question font que l'adjuvant selon lesdits brevets français présente une tendance au mottage telle que son stockage pose des problèmes très sérieux aux industriels, ledit mottage se traduisant par la formation de gros blocs durs qu'il devient rapidement impossible de mettre en oeuvre.

Or, la Société Demanderesse a eu le mérite de trouver qu'il était possible de remédier à ces inconvénients en faisant comprendre aux particules constitutives des adjuvants de congélation du genre en question au moins un moyen propre à améliorer l'aptitude à la dispersion et à la dissolution, ledit moyen étant choisi dans le groupe constitué, d'une part, par les agents de fragilisation et, d'autre part, par une pluralité de microcavités.

Il s'ensuit que l'adjuvant de congélation conforme à l'invention qui comprend:

- de 50 à 99% en poids d'un agent cryoprotecteur hydrophile soluble dans l'eau constitué par un sucre et/ou un sucre-alcool,
- de 0,5 à 30% en poids d'un agent tensio-actif et/ou d'une huile ou graisse dispersés dans l'agent cryoprotecteur sous forme finement divisée et que l'on qualifiera par la suite de colloïdale,
- de 0 à 20% de phosphates

est caractérisé par le fait que ses particules constitutives comportent en outre au moins un moyen propre à

EP 0 336 835 B1

améliorer son aptitude à la dispersion et à la dissolution, le dit moyen étant choisi dans le groupe constitué, d'une part, par les agents de fragilisation et, d'autre part, par une pluralité de microcavités.

Le susdit adjuvant de congélation présente de préférence les caractéristiques suivantes prises isolément ou en combinaison les unes avec les autres:

- la proportion d'agent de fragilisation est de 0,5 à 10% en poids,
- l'agent de fragilisation est choisi dans le groupe comprenant les amidons, fécules ou celluloses natifs ou modifiés, ainsi que la cellulose microcristalline,
- la pluralité de microcavités présente un volume total tel que la densité apparente des particules constitutives dudit adjuvant soit au plus égale à 95% de la densité des mêmes particules sans microcavités et supérieure à 50%, de préférence supérieure à 80% de la densité de ces dernières,
- toute coupe granulométrique étroite dudit adjuvant présente une densité inférieure à 0,56, de préférence inférieure à 0,46 et plus préférentiellement encore inférieure à 0,42.

Le susdit adjuvant, lorsqu'il comporte une pluralité de microcavités est, de plus, caractérisé par le fait que

- la coupe granulométrique comprise entre 500 et 630 μm présente un temps de dispersion totale et complète des particules, inférieur à 72 secondes, de préférence inférieur à 65 secondes et plus préférentiellement encore inférieure à 62 secondes,
- la coupe granulométrique comprise entre 850 et 1000μm présente un temps de dispersion totale et complète des particules, inférieur à 108 secondes, de préférence inférieur à 98 secondes et plus préférentiellement encore inférieure à 92 secondes,
- la coupe granulométrique comprise entre 1000 et 1500 μm présente un temps de dispersion totale et complète des particules, inférieur à 150 secondes, de préférence inférieur à 131 secondes et plus préférentiellement encore inférieure à 120 secondes.

Grâce à l'amélioration de l'aptitude à la dispersion et à la dissolution de l'adjuvant conforme à l'invention par rapport aux adjuvants de l'art antérieur, il devient même possible d'admettre pour ses particules constitutives une granulométrie supérieure à 1 mm inconcevable dans le cas de l'adjuvant selon l'art antérieur, l'invention permettant par là même et de façon inattendue, de remédier à l'inconvénient inhérent à la tendance au mottage de l'adjuvant selon l'art antérieur étant donné que, pour des particules répondant à une granulométrie supérieure à 1 mm, ladite tendance se trouve fortement réduite.

Avantageusement, l'adjuvant de congélation conforme à l'invention présente par conséquent une granulométrie centrée sur une valeur moyenne supérieure à 0,50 mm et, de préférence, supérieure à 1 mm.

L'invention vise également un procédé de préparation de l'adjuvant.

Selon ce procédé, on a recours à une extrusion d'un mélange comprenant le sucre ou sucre-alcool fondu et/ou cristallisé et déshydraté, les agents tensio-actifs et/ou les matières grasses, les phosphates s'il doit en contenir et les agents de fragilisation du groupe susindiqué, ladite extrusion étant effectuée sous des conditions qui permettent la cristallisation du sucre ou sucre-alcool fondu déshydraté.

Toujours selon ce procédé et lorsque l'adjuvant ne comporte pas d'agents de fragilisation, on fait comprendre aux particules d'adjuvant les susdites microcavités

- soit en atomisant une dispersion ou une solution contenant le sucre et/ou les sucres-alcool, les émulsifiants et/ou matières grasses et éventuellement les phosphates,
- soit en effectuant une granulation humide des constituants de l'adjuvant mis en oeuvre à l'état pulvérulent, cette granulation humide étant suivie d'un séchage,
- soit en procédant directement à l'extrusion en présence d'un gaz comprimé.

L'adjuvant de congélation conforme à l'invention doit être présent dans le produit qu'il a pour but de protéger contre les effets de la congélation, c'est-à-dire le SURIMI lorsqu'il s'agit d'un aliment à base de chair de poisson, à une concentration de 1 à 12% en poids par rapport au poids de la chair.

L'invention vise, à titre de produits industriels nouveaux, les produits alimentaires, notamment ceux du type SURIMI contenant de 1 à 12% en poids d'adjuvant de congélation conforme à l'invention ainsi que les diverses "charcuteries de la mer" préparées à partir de ce SURIMI.

L'invention vise également le procédé de préparation des produits alimentaires comportant l'adjuvant de congélation conforme à l'invention.

Ce procédé est caractérisé par le fait qu'avant congélation, on incorpore auxdits produits alimentaires une proportion efficace de l'adjuvant conforme à l'invention, cette proportion étant de 1 à 12% par rapport au poids de chair lorsque le produit alimentaire est constitué par du SURIMI, ledit adjuvant étant alors incorporé à la chair de poisson lavée de telle sorte que sa répartition au sein du SURIMI soit la plus homogène possible, ce qui est réalisé en effectuant l'incorporation au niveau du hachoir.

Se proposant, par conséquent, de constituer un adjuvant de congélation conforme à l'invention, on s'y prend comme suit ou de façon équivalente.

On lui fait comprendre:

3

- de 50 à 99% en poids d'un agent cryoprotecteur hydrophile soluble dans l'eau constitué par un sucre ou un sucre-alcool,
- de 0,5 à 30% en poids d'un agent tensio-actif et/ou d'une huile ou graisse dispersés dans l'agent cryoprotecteur sous forme finement divisée ou colloïdale,
- de 0 à 20% de phosphates et au moins l'un des moyens du groupe comprenant
    - d'une part, une proportion de 0,5 à 10% en poids d'un des agents de fragilisation du groupe comprenant les amidons, fécules ou celluloses natifs ou modifiés, ainsi que la cellulose microcristalline,
    - d'autre part, une pluralité de microcavités dont le volume total est tel que la densité apparente desdites particules soit au plus égale à 95% de la densité des mêmes particules sans microcavités et supérieure à 50%, de préférence supérieure à 80% de la densité de ces dernières.

L'agent cryoprotecteur hydrophile soluble dans l'eau, constitué par un sucre et/ou sucre-alcool, est avantageusement choisi,
- en ce qui concerne les sucres, dans le groupe comprenant le saccharose, le maltose, le glucose, le fructose, le polydextrose et,
- en ce qui concerne les sucres-alcool, dans le groupe comprenant le sorbitol, le mannitol, le maltitol, le xylitol et le sucre-alcool connu sous la marque PALATINIT.

Le sorbitol et le saccharose sont particulièrement préférés.

L'agent tensio-actif est avantageusement choisi dans le groupe comprenant la lécithine et les esters d'acides gras et de polyols tels que le glycérol, le polyglycérol, le propylèneglycol, le sorbitan, le saccharose.

Les esters de sorbitan et notamment les produits connus sous la dénomination SPAN 60 ou 80 sont particulièrement préférés.

L'huile ou la matière grasse est choisie de préférence dans le groupe comprenant les huiles de soja, de coton, de colza, le suif, le saindoux et les graisses de poisson.

Les phosphates sont de préférence des polyphosphates tels que le pyrophosphate de sodium ou le tripolyphosphate de sodium.

L'adjuvant de congélation peut être d'une granulométrie centrée sur une valeur moyenne supérieure à 0,5 mm, mais les granulométries supérieures à 1 mm sont préférées.

Il est préparé par extrusion, sous des conditions qui permettent la cristallisation du sucre ou sucre-alcool fondu et/ou cristallisé et déshydraté, d'un mélange dudit sucre ou sucre-alcool, des agents tensio-actifs et/ou des matières grasses, des phosphates s'il doit en contenir et des agents de fragilisation.

Lorsqu'il n'y a pas d'agents de fragilisation, on fait comprendre aux particules d'adjuvant les susdites microcavités
- soit en atomisant une dispersion ou une solution contenant le sucre et/ou les sucres-alcool, les émulsifiants et/ou matières grasses et éventuellement les phosphates,
- soit en effectuant une granulation humide des constituants de l'adjuvant mis en oeuvre à l'état pulvérulent, cette granulation humide étant suivie d'un séchage,
- soit en procédant directement à l'extrusion en présence d'un gaz comprimé.

La susdite extrusion peut être effectuée sur des machines qui ont par exemple été décrites dans le brevet US N° 3.618.902 de TELEDYNE INC. et dont l'application à la fabrication du sorbitol poudre a été décrite dans le brevet US N° 4.252.794 de I.C.I., ou encore de la façon qui a été décrite dans le brevet français N° 2.072.535 de TOWA KASEI, ou encore sur une machine de type bi-vis commercialisée par la Société WERNER PFLEIDERER.

La dispersibilité de l'adjuvant de congélation conforme à l'invention a été déterminée en mesurant les variations de la turbidité occasionnée par sa dispersion dans de l'eau froide.

Pour ce faire, on peut utiliser un néphélomètre NOVASINA ANALITE NTM S 150 fonctionnant dans la gamme de 0 à 20.000 NTU (unités de turbidité) dont l'électrode est introduite dans un bécher en inox à double enveloppe à une profondeur telle que son extrémité se trouve à 2,5 cm du fond du bécher. Ce bécher d'un diamètre intérieur de 10 cm et d'une hauteur de 13,5 cm est rempli de 600 g d'eau refroidie à +4°C. Cette eau est maintenue en agitation à l'aide d'un barreau aimanté de diamètre 1 cm et de longueur 6 cm dont la rotation à 800 tours/minute est assurée par un agitateur magnétique placé sous le bécher. Un enregistreur enregistre automatiquement les variations de la turbidité occasionnée par l'introduction brutale d'une quantité définie d'adjuvant au coeur du vortex formé par l'eau froide. La quantité d'adjuvant utilisée a été à chaque expérience choisie de façon telle qu'on obtienne une concentration finale de 30 g de sucre-alcool dissous dans 600 g d'eau.

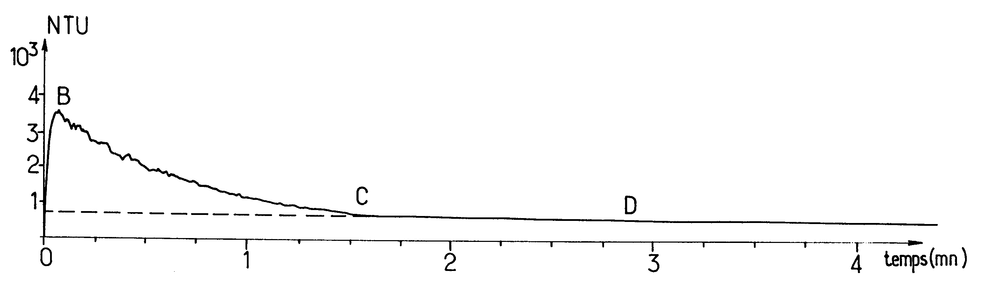

On a représenté sur la figure unique ci-jointe une courbe $C_1$ représentative des variations de la turbidité en fonction du temps, en d'autres termes en fonction de la dissolution progressive du sucre ou sucre-alcool, dissolution qui tend vers une limite asymptotique correspondant à la dissolution totale du sucre ou sucre-alcool, la turbidité résiduelle provenant des constituants non solubles de l'adjuvant.

Cette courbe comprend, à partir du moment 0 de l'introduction:

- un premier segment A B, de pente très forte, correspondant à la dispersion des grains de l'adjuvant dans l'eau froide et à l'apparition d'un trouble macroscopique,
- un deuxième segment B C, de pente très fortement décroissante puis tendant ensuite vers 0, correspondant à la solubilisation de la matrice glucidique et donc à la diminution du trouble lié à la présence de particules macroscopiques,
- un troisième segment C D, de pente nulle, dont l'ordonnée à l'origine correspond au trouble résiduel lié à la présence dans l'eau froide de microparticules constituées par les composants insolubles de l'adjuvant.

Le temps correspondant au point C de la courbe $C_1$ a été pris comme référence de la dispersion totale et complète de l'adjuvant.

La tendance au mottage des poudres a été déterminée de la manière décrite ci-après.

On a recours à un matériel comprenant:
- un tube en acier inoxydable: hauteur 4,5 cm, diamètre intérieur 4 cm,
- un cylindre d'acier: diamètre 3,9 cm, poids 425 g, à l'aide duquel on exerce une pression à la base de 35 g/cm$^2$,
- une étuve à température et hygrométrie contrôlées,
- une boîte de PETRI,
- une bandelette de papier: longueur 14 cm, largeur 5 cm, utilisée pour faciliter le démoulage ultérieur. Successivement,
- on applique contre la paroi intérieure du tube, sans la coller, la bandelette de papier, puis on place l'ensemble sur le couvercle de la boîte de PETRI,
- on verse dans le tube 35 g de poudre,
- on prépare pour chaque essai deux tubes ainsi garnis de poudre, on laisse un tube en l'état et on pose sur la surface de la poudre contenue dans le deuxième tube le cylindre d'acier. (Celui-ci exercera alors sur la poudre une pression sensiblement équivalente à celle régnant au fond d'un emballage cylindrique contenant 50 kg de poudre),
- on laisse les deux échantillons durant 15 jours dans l'étuve à une humidité relative de 30% en répétant des cycles de température de 20°C durant 16 heures, puis de 40°C durant 8 heures,
- au terme des 15 jours, on démoule les poudres en ôtant d'abord le cylindre puis en déroulant ensuite la bandelette de papier.

Le résultat de ces expériences permet d'évaluer la tendance au mottage de la poudre.

Une forte tendance au mottage se traduit après démoulage par une parfaite conservation de la forme cylindrique du moule tandis qu'une absence de tendance au mottage se traduit par la formation immédiate d'un cône de poudre.

On affecte bien entendu une qualification intermédiaire (tendance moyenne, faible) aux différentes conformations que peut prendre la poudre lors de son démoulage.

Bien entendu, pour que les résultats soient comparables entre eux, les tests de dispersion et de mottage ont été réalisés sur des coupes granulométriques identiques et étroites.

On a pris comme exemple comparatif représentatif de l'art antérieur, l'adjuvant connu sous la marque PREBEST TP 433 commercialisé par la Société UENO (Japon). Cet adjuvant de congélation qui est destiné à la préparation du SURIMI et dont la composition est la suivante:

- sorbitol :            87 % en poids
- ester du glycérol:       6,5% en poids
- polyphosphates:        6,5% en poids

a révélé à l'analyse granulométrique le spectre suivant (norme AFNOR NF-X-11-504, décembre 1970):

```
- particules de taille inférieure à   200 microns    3%
-      "           "         "      à   250 microns    5%
-      "           "         "      à   355 microns   13%
-      "           "         "      à   500 microns   26%
-      "           "         "      à   800 microns   76%
-      "           "         "      à  1000 microns   99%.
```

La granulométrie de ce produit est donc centrée sur une valeur moyenne de 630 microns.

EXEMPLE

Dans une installation d'extrusion TELEDYNE READCO telle que décrite dans le brevet US N° 4.252.794, on prépare un certain nombre d'adjuvants en introduisant un mélange composé pour 100 parties en poids de sorbitol, de:
- 5,98 parties de SPAN 80 (ester monooléique du sorbitan)
- 3,00 parties de tripolyphosphate de sodium,
- 3,00 parties de pyrophosphate de sodium neutre,
- un nombre variable de parties d'agent de délitement ou de fragilisation (voir tableau I), cet agent de délitement ou de fragilisation étant introduit juste avant l'extrusion
et on conduit l'extrusion de façon telle qu'à la sortie de l'extrudeuse la température de l'adjuvant soit de 90°C; après refroidissement, le produit obtenu a été broyé puis tamisé.

Un témoin ne comportant pas d'agent de fragilisation a également été préparé ainsi qu'un adjuvant ne comportant pas d'agent de fragilisation mais par contre une pluralité de microcavités constituant un réseau poreux au sein des particules.

La pluralité de microcavités a été obtenue par granulation humide d'une poudre fine du produit témoin. De façon plus précise, on a ajouté lentement 10% d'eau à une poudre fine de granulométrie centrée sur une valeur moyenne inférieure à 150 microns du produit extrudé sans agent de fragilisation ou délitement, ceci dans un mélangeur de type HOBART, puis on a séché les agglomérats formés dans un séchoir à lit fluidisé de type AEROMATIC. Le produit résultant a été tamisé.

Pour tous les produits obtenus, les tests de dispersion, de mottage et de mesure de densité ont été réalisés sur des coupes granulomériques étroites de la façon décrite ci-dessus. Les coupes granulométriques retenues ont été, pour la plus fine d'entre elles, de 500 à 630 microns, pour la coupe intermédiaire, de 850 à 1000 microns et, pour la plus grosse, de 1000 à 1500 microns.

Dans le tableau I ci-après, on a indiqué:
- les temps de dispersion moyens d'un ensemble d'essais correspondant au point C de la courbe $C_1$ obtenus par la mesure de la néphélométrie ci-après et exprimés en secondes,
- les agents de fragilisation employés et leur proportion et
- la densité apparente, mesurée en éprouvette, des poudres pour la coupe granulométrique de 500 à 630 microns.

**TABLEAU I**

| Adjuvant de congélation | Agent de fragilisation | | Temps moyens de dispersion (en secondes) Coupe granulométrique | | | Densité (coupe granulométrique de 500 à 630 µm) |
|---|---|---|---|---|---|---|
| | Nature | Proportion | de 500 à 630 µm | de 850 à 1000 µm | de 1000 à 1500 µm | |
| PREBEST TP 433 avant tamisage | | | | | | |
| PREBEST TP 433 après séparation (*) | | | 75 | 84 | | 0,58 |
| Adjuvant selon l'invention à microcavités (**) | | | 59 | 108 | 125 | 0,43 |
| Adjuvant selon l'invention | Amidon de maïs | 1% | 57 | 93 | 127 | |
| | | 4% | 54 | 76 | 97 | |
| | | 8% | 48 | 69 | 94 | |
| " | Fécule de pomme de terre | 2% | 52 | 64 | 84 | 0,42 |
| | | 4% | 53 | 71 | 94 | 0,43 |
| | | 8% | 62 | 92 | 120 | |
| " | Amidon de blé | 2% | 65 | 98 | 131 | 0,46 |
| | | 4% | 63 | 89 | 115 | |
| " | Fécule carboxyméthylée | 4% | 58 | 83 | 128 | |
| | | 8% | 57 | 74 | 105 | |
| " | Cellulose microcristalline | 2% | 62 | 91 | 120 | |
| | | 4% | 67 | 103 | 136 | |
| Témoin expérimenté sans agent de fragilisation et sans microcavités | | | 72 | 110 | 150 | 0,50 |

(*) en coupes granulométriques par tamisage

(**) (densité apparente de 86% de la densité avant granulation)

Dans les conditions décrites pour les tests de mottage, aucun des deux produits dont la granulométrie est supérieure à 850 microns (coupes de 850 à 1000 microns et de 1000 à 1500 microns) n'a marqué de tendance au mottage tandis que le produit dont la granulomérie est inférieure à 850 microns (coupe de 500 à 630 microns) a montré, même sans application de pression, une certaine tendance au mottage, cette tendance devenant importante lors de l'application d'une pression.

Ces essais démontrent que la création d'un réseau poreux ou l'introduction au sein des particules de l'adjuvant d'un agent de fragilisation diminue nettement leur temps de dispersion dans l'eau froide de ces particules; l'invention fournit donc des adjuvants de congélation ne mottant pas et dont la vitesse de dispersion est augmentée par rapport aux produits de l'art antérieur; dans les susdits exemples, les meilleurs résultats ont été obtenus par la présence dans les particules d'adjuvant soit d'une proportion de 2% de fécule de pomme de terre, soit d'une proportion de 8% d'amidon de maïs.

## Revendications

1.  Adjuvant de congélation pour aliments à base de chair hachée, notamment de poisson, comprenant
    - de 50 à 99% en poids d'un agent cryoprotecteur hydrophile soluble dans l'eau constitué par un sucre et/ou un sucre-alcool,
    - de 0,5 à 30% en poids d'un agent tensioactif et/ou d'une huile ou graisse dispersés dans l'agent cryoprotecteur sous forme finement divisée,
    - de 0 à 20% de phosphates,
    caractérisé par le fait qu'il comporte en outre au moins un moyen propre à améliorer son aptitude à la dispersion et à la dissolution, le dit moyen étant choisi dans le groupe constitué, d'une part, par les agents de fragilisation et, d'autre part, par une pluralité de microcavités.

2.  Adjuvant de congélation selon la revendication 1, caractérisé par le fait que la proportion d'agent de fragilisation est de 0,5 à 10% en poids.

3.  Adjuvant de congélation selon l'une des revendications 1 et 2, caractérisé par le fait que l'agent de fragilisation est choisi dans le groupe comprenant les amidons, fécules ou celluloses natifs ou modifiés, ainsi que la cellulose microcristalline.

4.  Adjuvant de congélation selon la revendication 1, caractérisé par le fait que la pluralité de microcavités présente un volume total tel que la densité apparente des particules constitutives dudit adjuvant soit au plus égale à 95% de la densité des mêmes particules sans microcavités et supérieure à 50%, de préférence supérieure à 80% de la densité de ces dernières.

5.  Adjuvant de congélation selon l'une des revendications 1 à 4, caractérisé par le fait que toute coupe granulométrique étroite dudit adjuvant présente une densité inférieure à 0,56, de préférence inférieure à 0,46 et plus préférentiellement encore inférieure à 0,42.

6.  Adjuvant de congélation selon l'une des revendications 1 à 5, caractérisé par le fait que
    - la coupe granulométrique comprise entre 500 et 630 $\mu$m présente un temps de dispersion totale et complète des particules, inférieur à 72 secondes, de préférence inférieur à 65 secondes et plus préférentiellement encore inférieure à 62 secondes,
    - la coupe granulométrique comprise entre 850 et 1000$\mu$m présente un temps de dispersion totale et complète des particules, inférieur à 108 secondes, de préférence inférieur à 98 secondes et plus préférentiellement encore inférieure à 92 secondes,
    - la coupe granulométrique comprise entre 1000 et 1500 $\mu$m présente un temps de dispersion totale et complète des particules, inférieur à 150 secondes, de préférence inférieur à 131 secondes et plus préférentiellement encore inférieure à 120 secondes.

7.  Adjuvant selon l'une des revendications 1 à 6, caractérisé par le fait qu'il présente une granulométrie centrée sur une valeur moyenne supérieure à 0,50 mm, de préférence supérieure à 1 mm.

8.  Adjuvant selon l'une des revendications 1 à 7, caractérisé par le fait que le sucre et/ou sucre-alcool est choisi
    - en ce qui concerne le sucre, dans le groupe comprenant le saccharose, le maltose, le glucose, le fructose, le polydextrose et,
    - en ce qui concerne le sucre-alcool, dans le groupe comprenant le sorbitol, le mannitol, le maltitol, le xylitol et le sucre-alcool connu sous la marque PALATINIT.

9.  Adjuvant selon l'une des revendications 1 à 8, caractérisé par le fait que l'agent tensio-actif est choisi dans le groupe comprenant la lécithine et les esters d'acides gras et de polyols tels que le glycérol, le polyglycérol, le propylèneglycol, le sorbitan, le saccharose.

**10.** Adjuvant selon l'une des revendications 1 à 9, caractérisé par le fait que l'huile ou la matière grasse est choisie dans le groupe comprenant les huiles de soja, de coton, de colza, le suif, le saindoux et les graisses de poisson.

**11.** Adjuvant selon l'une des revendications 1 à 10, caractérisé par le fait que le phosphate est constitué par le pyrophosphate de sodium ou le tripolyphosphate de sodium.

**12.** Procédé de préparation de l'adjuvant selon l'une des revendications 1 à 11, caractérisé par le fait que, pour lui faire comporter le moyen propre à améliorer son aptitude à la dispersion et à la dissolution,
- soit l'on a recours à une extrusion d'un mélange comprenant le sucre ou sucre-alcool fondu et/ou cristallisé et déshydraté, les agents tensio-actifs et/ou les matières grasses, les phosphates s'il doit en contenir et les agents de fragilisation du groupe sus-indiqué, ladite extrusion étant effectuée sous des conditions qui permettent la cristallisation du sucre ou sucre-alcool fondu déshydraté,
- soit l'on fait comprendre aux particules d'adjuvant une pluralité de microcavités
  . ou bien en atomisant une dispersion ou une solution contenant le sucre et/ou les sucres-alcool, les émulsifiants et/ou matières grasses et éventuellement les phosphates,
  . ou bien en effectuant une granulation humide des constituants de l'adjuvant mis en oeuvre à l'état pulvérulent, cette granulation humide étant suivie d'un séchage,
  . ou bien en procédant directement à l'extrusion en présence d'un gaz comprimé.

**13.** Procédé de préparation de produits alimentaires à base de chair hachée destinés à la congélation, caractérisé par le fait qu'avant congélation on incorpore auxdits produits alimentaires une proportion efficace de l'adjuvant selon l'une des revendications 1 à 11, cette proportion étant de 1 à 12% par rapport au poids de chair lorsque le produit alimentaire est constitué par du SURIMI, ledit adjuvant étant alors incorporé à la chair de poisson lavée de telle sorte que sa répartition au sein du SURIMI soit la plus homogène possible, ce qui est réalisé en effectuant l'incorporation au niveau du hachoir.

**14.** Produits alimentaires, notamment ceux du type SURIMI, caractérisés par le fait qu'ils contiennent de 1 à 12% en poids d'adjuvant de congélation selon l'une des revendications 1 à 11.

## Claims

**1.** Freezing additive for foodstuffs based on minced meat, especially fish, comprising
- from 50 to 99% by weight of a cryoprotective agent which is hydrophile and soluble in water and which is constituted by a sugar and/or a sugar-alcohol,
- from 0.5 to 30% by weight of a surfactive agent and/or of an oil or a fat which are dispersed within the cryoprotective agent in a finely divided form,
- from 0 to 20% of phosphates,
the said freezing additive being characterized by the fact that it comprises at least one means adapted to improve its capability for dispersion and for dissolution, the said means being selected from the group consisting, on the one hand, of at least one fragilizing or brittling agent and, on the other hand, of a plurality of microcavities.

**2.** Freezing additive according to claim 1, characterized by the fact that the proportion of fragilizing or brittling agent is from 0.5 to 10% by weight.

**3.** Freezing additive according to one of claims 1 and 2, characterized by the fact that the fragilizing agent is selected from the group comprising native or modified starches, potato starches or celluloses, as well as microcrystalline cellulose.

**4.** Freezing additive according to claim 1, characterized by the fact that the plurality of microcavities has a total volume which is such that the apparent density of the constituent particles of the said additive is at the most equal to 95% of the density of the same particles, without microcavities and higher than 50%, preferably higher than 80% of their density.

**5.** Freezing additive according to one of claims 1 to 4, charactriezed by the fact that any narrow granulometric fraction of the said additive has a density lower than 0.56, preferably lower than 0.46 and still more preferably lower than 0.42.

9

6. Freezing additive according to one of claims 1 to 5, characterized by the fact that
   - the granulometric fraction comprised between 500 and 630 microns has a time of total and complete dispersion of the particles lower than 72 seconds, preferably lower than 65 seconds and still more preferably lower than 62 seconds,
   - the granulometric fraction comprised between 850 and 1000 microns has a time of total and complete dispersion of the particles lower than 108 seconds, preferably lower than 98 seconds and still more preferably lower than 92 seconds,
   - the granulometric fraction comprised between 1000 and 1500 microns has a time of total and complete dispersion of the particles lower than 150 seconds, preferably lower than 131 seconds and still more preferably lower than 120 seconds.

7. Additive according to one of claims 1 to 6, characterized by the fact that it has a granulometry centered on an average value higher than 0. 50 mm, preferably higher than 1 mm.

8. Additive according to one of claims 1 to 7, characterized by the fact that the sugar and/or the sugar-alcohol is selected
   - as far as the sugars are concerned, from the group comprising sucrose, maltose, glucose, fructose and polydextrose and,
   - as far as the sugar-alcohols are concerned, from the group comprising sorbitol, mannitol, maltitol, xylitol and the sugar-alcohol which is known under the trademark PALATINIT.

9. Additive according to one of claims 1 to 8, characterized by the fact that the surfactive agent is selected from the group comprising lecithin and the esters of fatty acids and of polyols such as glycerol, polyglycerol, propyleneglycol, sorbitan, sucrose.

10. Additive according to one of claims 1 to 9, characterized by the fact that the oil or fat is selected from the group comprising the oils of soya, coton, colza, tallow, lard and fish fats.

11. Additive according to one of claims 1 to 10, characterized by the fact that the phosphate is constituted by sodium pyrophosphate or sodium tripolyphosphate.

12. Process for the preparation of the additive according to one of claims 1 to 6, characterized by the fact that, in order to include into the constituent particles of the said additive the means adapted to improve its capability for dispersion or for dissolution,
    - either there is extruded a mixture comprising the sugar or sugar-alcohol melted and/or crystallized, and dehydrated, the surfactive agents and/or the fats, the phosphates if any and the fragilizing agents, the said extrusion being carried out under conditions such that the sugar or the sugar-alcohol melted and dehydrated can cristallize,
    - or the particles of additive are provided with the above-mentioned microcavities
      . either by atomizing a dispersion or a solution containing the sugar and/or the sugar-alcohols, the emulsifiers and/or the fats and, if any, the phosphates,
      . or by wet granulation of the constituents of the additive which are used as powders, the said wet granulation being followed by a drying step,
      . or by direct extrusion in the presence of a compressed gas.

13. Process for the preparation of food products on the basis of minced meat which are intended to be freezed, characterized by the fact that, before freezing, there are incorporated into the said food products an efficient proportion of the additive according to one of claims 1 to 11, the said proportion being from 1 to 12% by weight with respect to the weight of meat in the event that the food product is constituted by SURIMI, the said additive being then incorporated to the fish meat once washed in such a manner that its distribution within the SURIMI is as homogeneous as possible, this result being obtained when carrying out the incorporation at the level of the chopping tool.

14. Food products, especially those of the SURIMI type, characterized by the fact that they contain from 1 to 12% by weight of the freezing additive according to one of claims 1 to 11.

**Patentansprüche**

1. Hilfsstoff zum Einfrieren von Nahrungsmitteln auf der Basis von Hackfleisch, insbesondere von Fisch, enthaltend

   - 50 bis 99 Gew.-% eines in Wasser löslichen, hydrophilen Gefrierschutzmittels, bestehend aus einem Zucker und/oder einem Zucker-Alkohol,
   - 0,5 bis 30 Gew.-% eines oberflächenaktiven Mittels und/oder eines Öles oder Fettes, dispergiert in dem Gefrierschutzmittel in fein verteilter Form ,
   - 0 bis 20 % Phosphate,

   dadurch gekennzeichnet, daß er außerdem mindestens ein Mittel umfaßt, das zur Verbesserung seiner Fähigkeit zur Dispersion und Auflösung beiträgt, wobei dieses Mittel einerseits aus der durch die Versprödungsmittel gebildeten Gruppe ausgewählt wird, und andererseits durch eine Vielzahl von Mikroporen gebildet wird.

2. Hilfsstoff zum Einfrieren nach Anspruch 1, dadurch gekennzeichnet, daß der Anteil des Versprödungsmittels 0,5 bis 10 Gew.-% beträgt.

3. Hilfsstoff zum Einfrieren nach einem der Ansprüche 1 und 2, dadurch gekennzeichnet, daß das Versprödungsmittel aus der durch Stärke, Stärkemehl, Natur-Cellulose, modifizierte Cellulose sowie mikrokristalline Cellulose gebildeten Gruppe ausgewählt wird.

4. Hilfsstoff zum Einfrieren nach Anspruch 1, dadurch gekennzeichnet, daß die Vielzahl von Mikroporen ein solches Gesamtvolumen aufweist, daß die scheinbare Dichte der Basis-Teilchen des genannten Hilfsstoffes höchstens gleich 95% der Dichte der gleichen Teilchen ohne Mikroporen und höher als 50 %, vorzugsweise als 80 % der Dichte dieser Teilchen ohne Mikroporen ist.

5. Hilfsstoff zum Einfrieren nach einem der Ansprüche 1 bis 4, dadurch gekennzeichnet, daß jeder enge granulometrische Schritt des genannten Hilfsstoffes eine Dichte von weniger als 0,56, vorzugsweise von weniger als 0,46 und ganz besonders bevorzugt von weniger als 0,42 aufweist.

6. Hilfsstoff zum Einfrieren nach einem der Ansprüche 1 bis 5, dadurch gekennzeichnet, daß
   - der granulometrische Schnitt zwischen 500 und 630 µm eine gesamte und vollständige Dispersionszeit der Teilchen von unterhalb 72 Sekunden, vorzugsweise von unterhalb 65 Sekunden und ganz besonders bevorzugt von unterhalb 62 Sekunden, aufweist,
   - der granulometrische Schnitt zwischen 850 und 1000 µm eine gesamte und vollständige Dispersionszeit der Teilchen von unterhalb 108 Sekunden, vorzugsweise von unterhalb 98 Sekunden und ganz besonders bevorzugt von unterhalb 92 Sekunden, aufweist,
   - der granulometrische Schnitt zwischen 1000 und 1500 µm eine gesamte und vollständige Dispersionszeit der Teilchen von unterhalb 150 Sekunden, vorzugsweise von unterhalb 131 Sekunden und ganz besonders bevorzugt von unterhalb 120 Sekunden, aufweist.

7. Hilfsstoff nach einem der Ansprüche 1 bis 6, dadurch gekennzeichnet, daß er eine zentrierte Granulometrie auf einem mittleren Wert von höher als 0,50 mm, vorzugsweise von höher als 1 mm, aufweist.

8. Hilfsstoff nach einem der Ansprüche 1 bis 7, dadurch gekennzeichnet, daß der Zucker und/oder der Zucker-Alkohol ausgewählt werden
   - was den Zucker betrifft, aus der Gruppe, die Saccharose, Maltose, Glucose, Fructose und Polydextrose umfaßt, und
   - was den Zucker-Alkohol betrifft, aus der Gruppe, die Sorbit, Mannit, Maltit, Xylit und den unter der Marke PALATINIT bekannten Zucker-Alkohol umfaßt.

9. Hilfsstoff nach einem der Ansprüche 1 bis 8, dadurch gekennzeichnet, daß das oberflächenaktive Mittel ausgewählt wird aus der Gruppe, die Lecithin, die Fettsäure-Ester und Polyole, wie Glycerol, Polyglycerol, Propylenglycol, Sorbitan und Saccharose, umfaßt.

10. Hilfsstoff nach einem der Ansprüche 1 bis 9, dadurch gekennzeichnet, daß das Öl oder das Fett ausgewählt werden aus der Gruppe, die Soja-Öl, Baumwoll-Öl, Raps-Öl, Talg, Schweineschmalz und Fischfette umfaßt.

11. Hilfsstoff nach einem der Ansprüche 1 bis 10, dadurch gekennzeichnet, daß das Phosphat aus Natriumpyrophosphat oder Natrium-tri-polyphosphat besteht.

12. Verfahren zur Herstellung des Hilfsstoffes nach einem der Ansprüche 1 bis 11, dadurch gekennzeichnet, daß man zum Realisieren des Mittels, das zur Verbesserung der Fähigkeit zur Dispersion und Auflösung beiträgt,

- entweder die Extrusion einer Mischung, die den Zucker oder Zucker-Alkohol, geschmolzen und/oder kristallisiert und dehydratisiert, die oberflächenaktiven Mittel und/oder die Fette, die Phosphate, wenn sie eingesetzt werden sollen, und die Versprödungsmittel der oben angegebenen Gruppe umfaßt, durchführt, wobei diese Extrusion unter Bedingungen erfolgt, die eine Kristallisation des dehydratisierten, geschmolzenen Zuckers oder Zucker-Alkohols gewährleisten,

- oder die Realisierung von Teilchen des Hilfsstoffes mit einer Vielzahl von Mikroporen vornimmt, unter

. Versprühen einer Dispersion oder einer Lösung, die den Zucker und/oder die Zucker-Alkohole, die Emulgatoren und/oder die Fette und gegebenenfalls die Phosphate enthält, oder

. Durchführung einer feuchten Granulierung der Bestandteile das Hilfsstoffes, die im pulverförmigen Zustand eingesetzt werden, gefolgt von einer Trocknung, oder

. direkter Durchführung einer Extrusion in Anwesenheit eines komprimierten Gases.

13. Verfahren zur Herstellung von Nahrungsprodukten auf der Basis von Hackfleisch, das zum Einfrieren bestimmt ist, dadurch gekennzeichnet, daß man vor dem Einfrieren eine wirksame Menge des Hilfsstoffes nach einem der Ansprüche 1 bis 11 in die Nahrungsprodukte einbringt, wobei diese Menge 1 bis 12 %, bezogen auf das Gewicht des Fleisches, beträgt, wenn das Nahrungsprodukt aus SURIMI besteht, wobei der gennannte Hilfsstoff in der Weise in das gewaschene Fischfleisch eingebracht wird, daß seine Verteilung in dem SURIMI so homogen wie möglich ist, was dadurch erreicht wird, daß das Einbringen während der Verarbeitung im Fleischwolf erfolgt.

14. Nahrungsprodukte, insbesondere diejenigen vom Typ SURIMI, dadurch gekennzeichnet, daß sie 1 bis 12 Gew.-% des Hilfsstoffes zum Einfrieren nach einem der Ansprüche 1 bis 11 enthalten.